# EUROPÄISCHE PATENTANMELDUNG

(11) **EP 1 785 182 A2**
(43) Veröffentlichungstag der Anmeldung: **16.05.2007**
(21) Anmeldenummer: 06020791.7
(22) Anmeldetag: 04.10.2006
(51) Int. Cl.: B01D 39/12

(54) **Filterelement**

(30) Priorität: 17.10.2005 AT 17002005
(71) Anmelder: Andritz AG, 8045 Graz (AT)
(72) Erfinder: Gabl, Helmuth, Dipl. Ing. Dr., 8046 Graz (AT); Waupotitsch, Michael, Dipl.-Ing., 8010 Graz (AT)
(74) Vertreter: Schweinzer, Friedrich

(57) **Zusammenfassung**

Die Erfindung betrifft ein Filterelement das in Durchströmrichtung (4) gesehen nach der Filterschicht (2) wenigstens zwei weitere Schichten (5,6,7,8) aufweist, deren Porengröße zunehmend größer wird. Damit können größtmöglichst offene Flächen bei gleichzeitiger minimaler Trenngrenze und Stabilität zur Verfügung gestellt werden.

## Beschreibung

Die Erfindung betrifft ein Filterelement zum Trennen von Feststoffen und Flüssigkeiten oder zur Fraktionierung in der Zellstoffindustrie mit einer Filterschicht.

Derartige Filterelemente dienen zur Feststoffrückgewinnung und Wasserreinigung aber auch zur Fraktionierung und Stoffreinigung bei der Papierherstellung bzw. Papierwiederaufbereitung. Die wesentlichen Merkmale eines derartigen Filterelements sind eine möglichst große offene Fläche (Porosität) sowie eine möglichst feine Trenngrenze.

Der Hauptnachteil von bekannten Stab- bzw. Schlitzkörben sowie von Lochkörben liegt in der Limitierung der erzielbaren kleinsten Loch- bzw. Schlitzweite. D.h. die Größe der Öffnungen ist fertigungsbedingt nach unten limitiert. Ein weiterer Nachteil besteht in der Längenausdehnung, d.h. längliche oder dünne und flächige Partikel, deren Teilchengröße zwar deutlich über der Schlitzweite liegt, können dennoch die Filterfläche passieren. Weiters verlangen die Stäbe eine gewisse minimale Festigkeit, wobei dies nur mit aufwändigen und teuren Stützkonstruktionen möglich ist. Je größer die Blechstärke, desto größer sind auch die minimalen erreichbaren Öffnungen. Sehr kleine Öffnungen können nur in sehr dünnen Blechen gefertigt werden, was wiederum eine aufwändige Stützkonstruktion notwendig macht. Zudem ist die offene Fläche bei sehr kleinen Öffnungen stark begrenzt, da diese im gewünschten Toleranzbereich nicht beliebig eng aneinander ausgeführt werden können.

Siebkörbe werden in ein- oder mehrlagiger Ausführung hergestellt, wobei die erreichbaren Maschenweiten deutlich unter den vergleichbaren Loch- bzw. Schlitzweiten der bisher genannten Körbe liegen. Ein weiterer Vorteil ist die weitaus höhere erreichbare offene Fläche. Nachteilig sind jedoch die mangelnde Gewebefestigkeit sowie die Empfindlichkeit der Oberfläche gegen mechanische Beschädigung. Eine erhöhte Festigkeit und Stabilität durch Schutz- und Stützschichten, die wesentlich gröber als die Filterfläche sind, hat den Nachteil der verminderten offenen Fläche der gesamten Filterschicht. Gestaltet man die einzelnen Lagen mit großen offenen Flächen, so ist die Verarbeitbarkeit, insbesondere das Schweißen von offenen Geweben, sehr schwierig. Ein weiterer Nachteil besteht in dem Effekt, dass sich die Öffnungen der Filterschicht um so leichter verstopfen, je kleiner sie sind, wobei die Zugabe von Filterhilfsstoffen und Chemikalien, welche die Betriebskosten erheblich steigern, diesen Effekt verstärken.

Der Erfindung liegt daher die Aufgabe zugrunde, eine Vorrichtung der eingangs genannten Gattung zur Verfügung zu stellen, welche die oben genannten Nachteile weitestgehend vermeidet.

Gelöst wird diese Aufgabe mit einem Filterelement mit den Merkmalen des Anspruches 1.

Dadurch dass in Durchströmrichtung gesehen nach der effektiven Filterschicht wenigstens zwei weitere Schichten vorhanden sind, deren Poren- oder Maschenweite zunehmend größer wird, wird eine größtmöglichst offene Fläche und damit eine gewünscht große Durchflussmenge erzielt, wobei gleichzeitig die theoretische Trenngrenze, d.h. der Porendurchmesser der Gewebeöffnungen der effektiven Filterschicht, sehr fein ausfallen kann.

Die Anordnung der wenigstens zwei Schichten, die als Stützschichten für die Filterschicht wirken, sowie deren Verbindung zur Filterschicht durch eine Einlage, welche wenigstens bereichsweise an wenigstens einem Randbereich der Schichten angeordnet ist, ermöglicht die Reduzierung des kumulierten Verlustes an offener Fläche über die einzelnen Filterschichten.

Erfindungsgemäß wird ein Filterelement mit größtmöglicher offener Fläche und gleichzeitiger minimaler Trenngrenze zur Verfügung gestellt, der kostengünstig und einfach in der Herstellung ist. Dabei ist die statische Festigkeit durch die weiteren Stützschichten sehr hoch, so dass auf eine aufwändige, externe Stütz- oder Rahmenkonstruktion verzichtet werden kann. Somit kann eine einfache, flexible und prozessrobuste Maschine auf Drucksortierbasis zur Filtration, Feststoffrückgewinnung und Wasserreinigung zur Verfügung gestellt werden.

Vorteilhafte und bevorzugte Ausführungsformen der Erfindung sind Gegenstand der Unteransprüche.

Weitere Einzelheiten der Erfindung ergeben sich aus der nachstehenden Beschreibung eines Ausführungsbeispiels der Erfindung unter Bezugnahme auf die angeschlossenen Zeichnungen.

Es zeigt: Fig. 1 einen schematischen Schnitt durch eine Ausführungsform des erfindungsgemäßen Filterelementaufbaus und die Fig. 2 und 3 eine Ansicht auf die Filterschichten gegen die Durchströmrichtung gesehen.

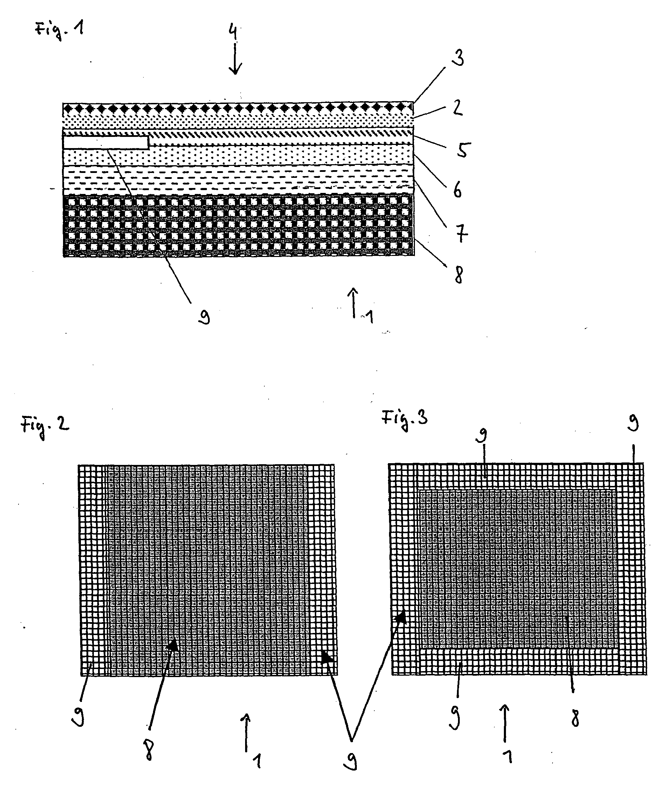

In Fig. 1 ist im Schnitt ein Aufbau eines Filters bzw. eines Filterelementes 1 gezeigt. Ein Filterkorb, z.B. einer Druckfiltervorrichtung, kann erfindungsgemäß nur aus einem oder aus einer Mehrzahl solcher Filterelemente 1 bestehen. Details der Druckfiltervorrichtung sind in den Zeichnungen nicht dargestellt, da sie auf an sich bekannte Weise ausgeführt sein können und für das Verständnis der Erfindung nicht von Belang sind. Der Filterkorb besteht dabei aber in Gegensatz zu herkömmlichen Schlitz- oder Lochkörben aus einer mehrlagigen Filterschicht, z.B. aus einzelnen Drahtgeweben. Der Filterkorb kann sowohl zylindrisch als auch kegelig ausgeführt und sowohl symmetrisch als auch asymmetrisch innerhalb einer Druckfiltervorrichtung angeordnet sein.

Die eigentliche, effektive Filterschicht 2 kann, je nach Anforderung, z.B. aus einem quadratischen oder aus einem Tressengewebe bestehen. Über der Filterschicht 2 ist eine Schutzlage 3 angeordnet, um die Filterschicht 2 vor Beschädigungen zu schützen. Je nach Anwendung und Medium kann die Schutzlage 3 auch entfallen.

In Durchströmrichtung 4 gesehen sind nach der Schutzlage 3 und der Filterschicht 2 weitere Schichten 5, 6, 7, 8 angeordnet. Da die Filterschicht 2 aufgrund ihres Aufbaus wegen ihrer sehr geringen Trenngrenze, die im Bereich von 0,1 bis 1000 :m, z.B. bei 150 :m, liegen kann, von sich aus nicht sehr formstabil ist, würde sie sich unter dem Druck einer anströmenden Flüssigkeit, z.B. einer Faserstoffsuspension bei der Papierherstellung, verformen, wodurch sich Mulden bilden können, in denen sich "Flüssigkeitsnester" bilden. Dieses Verformen ist unerwünscht, da es im Bereich der sich bildenden Mulden das Reinigen und Fraktionieren nachteilig beeinflusst.

Erfindungsgemäß verhindern die weiteren Schichten 5, 6, 7, 8 als Stützschichten dieses Verformen, wobei sie eine größtmöglichste offene Fläche über den Filterschichtverbund erlauben, indem ihre Maschenweite von der in Durchströmrichtung 4 gesehenen ersten Stützschicht 4 bis zur letzten Stützschicht 7 zunehmend größer wird, wobei die Stützschichten 5, 6, 7, 8 in Durchströmrichtung 4 gesehenen immer stabiler werden.

Wie in den Fig. 1, 2 und 3 ersichtlich, kann der Verbund der einzelnen Schichten 3 bis 8 durch Einlegen von streifenförmigen Einlagen 9 an bestimmten fertigungstechnisch relevanten Positionen verstärkt werden. Ziel dieser Einlagen 9 ist eine Verbesserung bei der Verbindung der einzelnen Schichten durch Schweißen, Kleben, Heften oder dergleichen, an den entsprechenden Stellen.

Wie die Fig. 2 und 3 am Beispiel rechteckiger Filterelemente 1 zeigen, können Einlagen 9 nur an zwei sich gegenüberliegenden Seiten (Fig. 2) oder an allen vier Seiten (Fig. 3) vorgesehen sein. Ein Filterkorb besteht aus einer Mehrzahl derartiger, nebeneinander angeordneter Filterelemente 1, die an einer nicht dargestellten Stützeinrichtung montiert sind.

Zusammenfassend kann ein Ausführungsbeispiel wie folgt beschrieben werden:
Die Erfindung betrifft ein Filterelement das in Durchströmrichtung 4 gesehen nach der Filterschicht 2 wenigstens zwei weitere Schichten 5,6,7,8 aufweist, deren Porengröße zunehmend größer wird. Damit können größtmöglichst offene Flächen bei gleichzeitiger minimaler Trenngrenze und Stabilität zur Verfügung gestellt werden.

## Patentansprüche

1. Filterelement zum Trennen von Feststoffen und Flüssigkeiten oder zur Fraktionierung in der Zellstoffindustrie mit einer Filterschicht, **dadurch gekennzeichnet, dass** in Durchströmrichtung (4) gesehen nach der Filterschicht (2) wenigstens zwei weitere Schichten (5,6,7,8) vorhanden sind, deren Porengröße zunehmend größer wird.

2. Filterelement nach Anspruch 1, **dadurch gekennzeichnet, dass** wenigstens eine der weiteren Schichten (5,6,7,8) aus einem Drahtgewebe besteht.

3. Filterelement nach Anspruch 2, **dadurch gekennzeichnet, dass** wenigstens zwei der weiteren Schichten (5,6,7,8) aus einem Drahtgewebe bestehen und dass deren Maschenweite in Durchströmrichtung (4) gesehen zunehmend größer wird.

4. Filterelement nach einem der Ansprüche 1 bis 3, **dadurch gekennzeichnet, dass** die Porengröße der Filterschicht (2) zwischen 0,1 und 1000 :m beträgt.

5. Filterelement nach einem der Ansprüche 1 bis 4, **dadurch gekennzeichnet, dass** das Filterelement (1) an einem Filterkorb angeordnet ist.

6. Filterelement nach Anspruch 5, **dadurch gekennzeichnet, dass** der Filterkorb und Reinigungselemente relativ zueinander drehbar sind.

7. Filterelement nach Anspruch 5 oder 6, **dadurch gekennzeichnet, dass** am Filterkorb eine Stützeinrichtung angeordnet ist, an der die Filterelemente (1) befestigt sind.

8. Filterelement nach einem der Ansprüche 1 bis 7, **dadurch gekennzeichnet, dass** die Filterschicht und/oder die weiteren Schichten (5,6,7,8) bereichsweise miteinander verbunden sind.

9. Filterelement nach Anspruch 8, **dadurch gekennzeichnet, dass** Verbindungsbereiche am Rand der Filterschicht und/oder der weiteren Schichten (5,6,7,8) liegen.

10. Filterelement nach Anspruch 8 oder 9, **dadurch gekennzeichnet, dass** im Verbindungsbereich eine Einlage (9) vorgesehen ist.

11. Filterelement nach Anspruch 10, **dadurch gekennzeichnet, dass** die Einlage (9) eine Schweißeinlage ist, an der die Filterschicht und/oder die weiteren Schichten (5,6,7,8) miteinander verschweißt sind.
